Europäisches Patentamt

European Patent Office

Office européen des brevets

(19)

(11) Numéro de publication : **0 020 224**
**B1**

# (12) FASCICULE DE BREVET EUROPÉEN

(45) Date de publication du fascicule du brevet :
**18.01.84**

(21) Numéro de dépôt : **80400667.4**

(22) Date de dépôt : **14.05.80**

(51) Int. Cl.³ : **C 03 C   1/02**, C 03 B   5/225,
C 03 C   1/10

(54) **Eléments agglomérés pour mélanges vitrifiables, procédé pour leur fabrication et leur application.**

(30) Priorité : **17.05.79 FR 7912572**

(43) Date de publication de la demande :
**10.12.80 Bulletin 80/25**

(45) Mention de la délivrance du brevet :
**18.01.84 Bulletin 84/03**

(84) Etats contractants désignés :
**AT BE CH DE GB IT LI SE**

(56) Documents cités :
**DE-A- 2 230 634**
**FR-A- 2 271 183**
**FR-A- 2 370 001**
**US-A- 3 150 991**
**US-A- 3 511 629**
**US-A- 3 589 885**
**THE GLASS INDUSTRY, vol. 48, no. 7, juillet 1967 W.H. MANRING et al.: "Reduced sulfur compounds as melting and refining aids for flint sodalime glasses", pages 374-380**

(73) Titulaire : **SAINT-GOBAIN EMBALLAGE**
**Les Miroirs 18, Avenue d'Alsace**
**F-92400 Courbevoie (FR)**

(72) Inventeur : **Barton, James Leonard**
**56, Rue de Boulainvilliers**
**F-75016 Paris (FR)**

(74) Mandataire : **Eudes, Marcel et al**
**Saint-Gobain Recherche 39 Quai Lucien Lefranc**
**F-93304 Aubervilliers Cedex (FR)**

# 0 020 224

Eléments agglomérés pour mélanges vitrifiables, procédé pour leur fabrication et leur application

La présente invention se rapporte à l'élaboration du verre et vise plus particulièrement à l'accélérer, et éventuellement à améliorer la qualité du verre produit.

Le processus de l'affinage du verre fait l'objet de théories diverses, mais la pratique prévoit généralement l'introduction dans la charge vitrifiable de certains agents, dits affinants, susceptibles de donner lieu à émission de gaz, dans un domaine de températures élevées, correspondant à de faibles viscosités du verre, lesdits gaz étant susceptibles d'être réabsorbés par le verre fondu, à un niveau de température moins élevé. Le dégagement gazeux provenant des agents affinants aurait notamment un rôle de brassage pour la masse vitreuse, et d'entraînement pour les petites bulles encore incluses à l'issue de la fusion proprement dite, et dont la vitesse ascensionnelle est très faible.

Il est usuel d'introduire dans le mélange vitrifiable, à titre d'agents affinants, divers sulfates métalliques, tels que le sulfate de sodium, le gypse, ou d'autres produits à base de sulfates apportant des oxydes métalliques dans la composition du verre. On admet généralement que ces sulfates jouent un rôle favorable lors de la fusion proprement dite, et que, lors de l'affinage, la libération de $SO_2$ aide à la disparition des bulles, puces ou bouillons. Ce dernier résultat serait d'ailleurs facilité par une oxydation du verre, en fin d'affinage, amenant le $SO_2$, constituant principal des ultimes bulles, à l'état de $SO_3$, plus soluble dans le verre fondu.

Il est en outre devenu d'usage fréquent d'ajouter du charbon à certains mélanges vitrifiables contenant des sulfates.

Il semblerait que la présence de charbon facilite la décomposition des sulfates et favorise le dégagement de $SO_2$ plutôt que la formation directe de $SO_3$ plus soluble. Selon une autre hypothèse, le charbon pourrait aussi réduire, au moins en partie, les sulfates en sulfures, qui joueraient un rôle favorable lors de la fusion puis, par oxydation ou réaction avec les sulfates, libéreraient du $SO_2$, lequel pourrait se réoxyder sous la couche des matières premières surnageantes et restituer ainsi du sulfate au niveau où celui-ci est le plus utile pour accélérer la fusion.

On a d'ailleurs également proposé, en s'appuyant sur cette hypothèse, d'introduire le soufre dans le mélange vitrifiable directement sous la forme de sulfures, éventuellement incorporés à divers matériaux tels que des laitiers de haut fourneau, sous-produits de l'industrie métallurgique, ou même à des frittes spécialement élaborées pour cet emploi.

Ces divers perfectionnements comportent chacun un certain nombre d'inconvénients. Ainsi dans les procédés consistant à introduire des sulfures métalliques dans le mélange vitrifiable du verre à produire, ou dans un mélange destiné à l'élaboration d'une fritte intermédiaire, des difficultés importantes apparaissent dès la préparation de la charge, en raison de l'instabilité chimique, de l'hygroscopicité et de la toxicité de la plupart de ces sels. En outre, lors de la fusion, ces derniers donnent lieu à des pertes importantes du fait de leurs fortes tensions de vapeur.

Quant aux laitiers métallurgiques, leur emploi est limité par le manque de constance de leurs compositions, et par leurs fortes teneurs en fer, qui les excluent pratiquement des verres « blancs », sauf opération coûteuse de déferrisation.

Parmi les procédés cités plus haut préconisant l'emploi de charges vitrifiables contenant à la fois sulfate métallique et charbon, certains montrent un certain bénéfice à réaliser leur mélange préalable, en particulier le procédé du brevet FR-A-2 271 183 qui préconise l'addition à la charge vitrifiable d'un mélange ($Na_2SO_4$ + sucre) ou ($Na_2SO_4$ + charbon de bois), ou celui du brevet US-A-3 589 885, qui propose l'emploi de coke broyé imprégné par une solution d'un sulfate métallique soluble.

Cette dernière présentation, bien qu'avantageuse en matière d'affinage, implique un certain nombre de contraintes, notamment dans le choix des matières premières et dans le mode de préparation du produit, et conduit à des difficultés d'emploi, par exemple pour éviter la ségrégation et obtenir une bonne homogénéité de teinte.

La présente invention, qui apporte divers perfectionnements aux procédés utilisant des mélanges vitrifiables contenant des sulfates et du charbon, vise à obtenir des résultats de niveau au moins aussi élevé que celui des procédés faisant usage de sulfures, tout en évitant les divers inconvénients mentionnés ci-dessus. Elle s'applique à des compositions verrières très diverses, tant dans la nature de leurs composants que dans leur mode de présentation. Elle apporte des solutions très avantageuses à certaines fabrications exigeantes, telles que celles des verres à faibles teneurs en fer, ou à forte teneur en sulfures.

L'invention facilite très notablement l'affinage du verre et permet aussi bien d'accélérer cette opération, en vue d'une augmentation de tirée du four, que de réduire la température à laquelle elle est conduite, et ainsi la dépense en combustible, l'usure des réfractaires, les pertes en certains éléments, etc...

L'invention a pour objet un procédé de fabrication de verres comportant la fusion d'une charge vitrifiable contenant des sulfates et un agent réducteur au sein d'éléments granulaires, et dont ils constituent les composants principaux, lesdits éléments étant dispersés de manière homogène parmi les autres matières premières de la charge, ce procédé étant caractérisé en ce que lesdits éléments granulaires sont préparés à partir d'un mélange intime et homogène desdits composants principaux, par

2

agglomération dudit mélange, et présentent une granulométrie moyenne au moins égale à 10 fois la granulométrie moyenne desdits composants principaux.

Lesdits éléments granulaires agglomérés peuvent être dispersés dans le mélange pulvérulent des autres matières premières constitutives de la charge, ou répartis de manière homogène parmi ou au sein même d'autres éléments agglomérés, qui pour clarifier l'exposé seront ci-après désignés par l'expression « agglomérats », renfermant lesdites autres matières premières.

Les proportions dans lesquelles les sulfates et l'agent réducteur entrent dans les éléments granulaires agglomérés de l'invention dépendent notamment de la conduite de la fusion du verre considéré. Elles sont généralement de préférence telles que la quantité d'agent réducteur corresponde à coup sûr à la réduction d'au moins un quart des ions $SO_4^=$ (sulfates) à l'état d'ions $S^=$ (sulfures).

Les quantités d'éléments granulaires agglomérés à introduire dans le mélange vitrifiable pour la mise en œuvre de l'invention correspondent à des apports de sulfates au plus du même ordre, et généralement inférieurs, à ceux nécessaires à l'affinage dans les conditions classiques.

Il est cependant souhaitable, pour effectuer une fusion selon le procédé de l'invention, d'introduire dans le mélange vitrifiable une quantité d'éléments granulaires agglomérés correspondant, compte tenu de leur teneur initiale en réducteur, à un apport potentiel en ions $S^=$ d'au moins 0,05 % exprimé en $SO_3$, par rapport au poids du verre (0,02 % de $S^=$).

La composition du verre à fabriquer est évidemment à prendre en considération pour le choix du ou des porteurs d'ions $SO_4^=$ dans la formulation des éléments granulaires agglomérés selon l'invention.

Il n'est pas exclu d'employer le sulfate de sodium, pour les verres contenant du sodium, mais, dans le cas des verres industriels silicosodocalciques les plus courants, il est généralement avantageux d'utiliser une matière première de faible prix, et peu soluble comme le gypse, ou même, pour faciliter l'opération de mise en forme des éléments granulaires, le plâtre, dont la granulométrie habituelle convient parfaitement.

A titre d'agent réducteur, il est avantageusement utilisé un charbon très réactif, tel que charbon de bois, broyé à une granulométrie inférieure à 100 μm. Des produits de moindre coût, comme le coke pulvérulent, peuvent aussi être employés, ou des produits de l'industrie du pétrole tels que brai ou fuel lourd qui en outre sont susceptibles d'exercer une action favorable sur la mise en forme des éléments granulaires et sur leurs caractéristiques mécaniques lors de leur cuisson, puis de leur mise en œuvre.

Les dimensions des éléments granulaires agglomérés à base de sulfates et de carbone, ainsi que par conséquent leurs formes, constituent des paramètres critiques pour la mise en œuvre de l'invention. Il convient en effet, sous peine de réduire considérablement les avantages apportés par l'invention, que ces éléments ne soient pas de trop faibles dimensions par rapport à la granulométrie de leurs constituants, comme il a déjà été précisé plus haut. De fortes dimensions, par ailleurs, conduisent à réduire le nombre des éléments, ce qui présente l'inconvénient d'augmenter à l'excès la masse de mélange vitrifiable correspondant à chacun d'eux. Il convient ainsi, en pratique, que les éléments granulaires agglomérés présentent des dimensions de l'ordre de 1 à 5 mm, la granulométrie de leurs constituants étant de préférence inférieure à 0,1 mm, et celles des autres constituants restant usuelles.

La fabrication des éléments granulaires agglomérés peut être effectuée par des procédés usuels et peu coûteux, tels que la granulation en assiette ou l'extrusion.

Leurs constituants sont avantageusement choisis de manière à obtenir des valeurs élevées de caractéristiques mécaniques à l'écrasement et à l'abrasion en vue de leur tenue lors des manipulations et de la fusion de la charge. Le liant peut constituer un élément déterminant à cet égard. On peut notamment faire appel, dans cette perspective, à un silicate de soude, mais une carboxyméthylcellulose ou des produits analogues conviennent également.

D'autres avantages et caractéristiques de l'invention apparaîtront dans les exemples qui seront donnés maintenant.

Exemple 1

On a porté dans le tableau II, page 12, les principales données relatives à des tests comparatifs portant sur :
— des mélanges traditionnels (témoins A et B), dans lesquels on a effectué respectivement un apport de $SO_4Na_2$ et de charbon de bois (témoin A) ou de $SO_4Na_2$, charbon de bois, $No_3Na$ et $As_2O_3$ (témoin B) ;
— des mélanges selon l'invention (fontes 1 à 7), dans lesquels des éléments granulaires à base de gypse et charbon de bois, d'un diamètre moyen de 2 mm, fournissent le carbone et au moins en partie le soufre de la charge, ces mélanges contenant éventuellement en outre, à l'état pulvérulent, les ajouts complémentaires du témoin B ($NO_3Na$, $As_2O_3$) et/ou des quantités supplémentaires de $SO_4Na_2$ ;
— enfin des mélanges se différenciant de ceux de l'invention en ce que les éléments granulaires agglomérés y ont été réduits en petits grains passant au tamis de maille de 0,2 mm (fontes 8 et 9).

La partie commune à ces différents mélanges vitrifiables est indiquée, de même que la formule théorique de base du verre visé, dans le tableau I ci-après :

(Voir Tableau I page 4)

3

Tableau I

| Formule théorique du verre (% poids) | | Matières premières (en kg pour 100 kg de verre) | |
|---|---|---|---|
| $SiO_2$ | 71,94 | Sable | 71,93 |
| $SO_3$ | 0,20 | Alumine calcinée | 1,94 |
| $Fe_2O_3$ | 0,017 | Borax déshydratée | 0,77 |
| $Al_2O_3$ | 2,00 | Dolomie | 16,78 |
| $B_2O_3$ | 0,48 | Fluosilicate de sodium | 0,707 |
| F | 0,33 | | |
| CaO | 9,55 | | |
| MgO | 2,88 | | |
| $Na_2O$ | 13,30 | | |

Le tableau II précise les divers paramètres variant d'un essai à l'autre, en correspondance avec la désignation de chacun d'eux : fontes A et B, et 1 à 9 (colonne 1).

Dans une première partie (colonnes 2 à 8), est indiquée la nature des ajouts venant compléter ladite partie commune des mélanges vitrifiables.

Dans les colonnes 9 et 10, sont rappelées les quantités totales de soufre (exprimé sous forme de $SO_3$) et de carbone, contenues dans chaque mélange.

La colonne 11 concerne la qualité de l'affinage, exprimée quantitativement par le nombre de bulles observées par kg de verre. Enfin, la couleur observée sous forte épaisseur (environ 10 cm) est notée dans la colonne 12.

On peut remarquer, dans la colonne 8, la distinction faite entre les éléments granulaires agglomérés présentant un diamètre moyen de 2 mm conformément à l'invention, pour les fontes 1 à 7, et les grains fins des fontes 8 et 9, obtenus par écrasement et passage au tamis de maille de 0,2 mm comme indiqué plus haut.

Les éléments granulaires de 2 mm ont été fabriqués à partir d'un mélange, à l'état pulvérulent, de gypse (3 kg), de charbon de bois (0,411 kg) et de carboxyméthylcellulose (0,150 kg du produit commercial désigné sous l'appellation de « Blanose »), sous pulvérisation d'eau, à l'aide d'un dispositif rotatif du type dénommé bol ou assiette de granulation.

Visant une granulométrie moyenne de 2 mm, on a sélectionné les éléments granulaires de diamètres compris entre 1,5 et 2,5 mm. Le séchage du produit a été effectué à 110 °C. Par analyse, on constate qu'il contient 11 % de carbone et 43 % de soufre exprimé sous forme de $SO_3$, soit environ 1,7 atome de carbone pour 1 mole de $SO_3$.

Les conditions des essais faisant l'objet du tableau II, et qui sont précisées ci-après, ne devront pas être considérées comme correspondant à une norme de fabrication industrielle. En effet, pour ces fusions effectuées avec un appareillage de laboratoire, quelques tests préliminaires ont permis de choisir, de façon classique, un mode opératoire ne conduisant pas, quel que soit le mélange étudié, à un affinage parfait, permettant ainsi de différencier quantitativement l'efficacité des ajouts utilisés par comptage du nombre des bulles subsistant après refroidissement du verre.

Selon ce mode opératoire unique, les fusions étaient effectuées à l'aide d'un four à sole tournante pouvant recevoir quatre pots identiques de platine, d'une capacité de 0,4 litre. Les mélanges vitrifiables à comparer y étaient déposés en trois enfournements égaux de 320 grammes environ, à 25 minutes d'intervalle, cette période correspondant sensiblement au temps nécessaire à la disparition de la motte. La température du four était maintenue à 1 440 °C pendant toute la phase de fusion, et stabilisée à cette valeur pour la phase dite d'affinage ; celle-ci était considérée comme débutant 25 minutes après le dernier enfournement et arrêtée au bout de 30 minutes.

Les pots étaient alors sortis du four et le verre était coulé en plaques d'une épaisseur de l'ordre de 1 cm.

Un traitement de recuisson était ensuite appliqué à ces plaques, permettant de préparer des échantillons de mêmes dimensions à l'aide de chaque verre obtenu.

Les résultats rassemblés dans le tableau II témoignent de l'influence de la présentation des apports en sulfate et en charbon. Par comparaison entre elles des fontes A, 1 et 8, ou des fontes B, 2 et 9, on voit que la substitution d'éléments granulaires à base de sulfate et de charbon à des quantités équivalentes de matériaux pulvérulents en mélange avec les autres constituants de la charge améliore l'affinage de façon sensible lorsque la dimension desdits éléments est de l'ordre de 2 mm (fontes 1 et 2), alors que ce bénéfice n'est qu'à peine ou pas notable pour des dimensions inférieures à 0,2 mm, c'est-à-dire du même ordre que la granulométrie moyenne des principaux constituants du mélange et en particulier du sable (fontes 8 et 9).

Ainsi qu'il est possible de le constater par l'examen de la colonne 12 du tableau II, l'invention est compatible avec une grande maîtrise du degré d'oxydo-réduction du verre. Elle s'accommode de proportions variées d'apports en sulfates complétant celui résultant de la présence des éléments granulaires, et n'exclut nullement l'introduction d'autres ajouts, tels que $As_2O_3$ et $NaNO_3$, permettant notamment l'ajustement de la teinte : alors que les fontes 1 et 2 présentent la teinte ambre caractéristique

4

des sulfures, la teinte des verres 4 à 7 témoigne de la disparition des sulfures sous l'effet d'ajouts croissants de sulfate de sodium.

A l'inverse, en adoptant des conditions de fusion nettement réductrices, il est possible d'élaborer des verres riches en sulfures, et notamment des frittes utilisables comme moyens d'apport de sulfures.

## Exemple 2

Comme on l'a déjà dit plus haut, la mise en œuvre de l'invention dans des fabrications industrielles est d'un intérêt tout particulier pour l'élaboration des verres à très faibles teneurs en fer. Le présent exemple décrit une fabrication industrielle de verre blanc de faconnage utilisant des éléments granulaires agglomérés selon l'invention, et met en évidence certains des principaux avantages qu'ils procurent.

Lesdits éléments ont été préparés à l'aide d'une mélangeuse comportant, d'une part, des pales en socs de charrue montées sur un axe horizontal tournant à vitesse relativement lente, et d'autre part, des couteaux montés sur un second axe, orthogonal au premier, et incliné de 30° par rapport à l'horizontale, tournant à vitesse beaucoup plus rapide et chargés d'éviter la formation (d'éléments granulaires) de granulométrie trop grossière.

Les matières suivantes ont été employées :
— plâtre : variété dite « de préfabrication », contenant environ 55 % de $SO_3$ sous forme de $SO_4Ca$. 0,5 $H_2O$ et de densité apparente 0,8 ;
— coke pulvérulent : de granulométrie 0-200 μm, contenant environ 83 % de C, et de densité apparente 0,6.

Dans la mélangeuse utilisée, de capacité nominale de 130 litres, chaque préparation a mis en œuvre 34,5 kg de plâtre, 5,5 kg de coke, et 20 kg d'eau, le rapport molaire $SO_3$/C correspondant sensiblement à 1/2 (0,6).

On procède au mélange tout d'abord à sec, durant environ 2 minutes, puis en ajoutant l'eau peu à peu, pendant environ 2 minutes. On brasse encore le mélange pendant environ 1 minute, avant d'extraire les granulés de l'appareil et de compléter la prise du plâtre par un séjour de 4 à 5 minutes sur un tapis.

Les éléments granulaires obtenus sont ensuite tamisés de manière à retenir la fraction granulométrique comprise entre 1 et 5 mm (environ 80 %), le refus (environ 20 % de gros et de fins) étant conservé pour être recyclé dans la mélangeuse, avec la charge suivante.

Les éléments sélectionnés sont ensuite séchés dans un appareil du type à lit fluidisé vibré, à fonctionnement continu, dans lequel la température du lit atteint environ 110-120 °C.

La densité apparente des éléments granulaires séchés est, dans les conditions précédentes de mise en œuvre du procédé, de l'ordre de 0,8, densité apparente du plâtre utilisé, et en tout cas aisément au moins égale à 0,6, densité apparente du coke utilisé, et par conséquent elle se rapproche suffisamment de celles des principales autres matières entrant dans la composition de mélange vitrifiable pour qu'il soit relativement aisé d'éviter une ségrégation indésirable desdits éléments granulaires lors des manipulations précédant la fusion du mélange vitrifiable auquel ils sont incorporés. A titre de comparaison, il est d'ailleurs intéressant de noter ici la densité apparente, à l'état non tassé, de quelques autres matières utilisées dans l'industrie verrière :

| | |
|---|---|
| — sable sec | : 1,5 |
| — carbonate de sodium « dense » | : 1,0 |
| — mélange vitrifiable complet | : 1,5 environ |
| — gravillon de coke (0,2-3 mm) | : 0,6 |

L'excellente résistance à l'abrasion des éléments granulaires séchés obtenus par le procédé de cet exemple constitue également une propriété très avantageuse pour lutter contre la ségrégation et le volage, et pour optimiser les résultats visés par l'invention.

On a utilisé les éléments granulaires ainsi fabriqués dans un mélange vitrifiable pour verre blanc de flaconnage ayant la composition suivante (en kg pour 100 kg de verre neuf) :

| | |
|---|---|
| sable | 69,0 |
| carbonate de sodium « dense » | 21,0 |
| calcaire | 9,0 |
| dolomie | 13,5 |
| néphéline syénite | 6,0 |
| sulfate de baryum | quantités minimes |
| nitrate de sodium | et variables selon |
| « décolorants » (CoO, Se) | les ajouts (d'éléments granulaires). |

On a comparé ce mélange vitrifiable additionné de 0,25 à 0,30 % en poids d'éléments granulaires d'une part à un mélange dans lequel lesdits éléments sont remplacés par leurs matières premières constitutives, et d'autre part à un mélange contenant du laitier de haut fourneau (1,7 %). On a constaté que le mélange selon l'invention conduisait à des performances comparables à celles procurées par

# 0 020 224

l'introduction de laitier, avec l'avantage sur cette dernière technique de dispenser de la mise en œuvre d'agents « décolorants » coûteux, et d'augmenter l'homogénéité de teinte du verre tiré. Par rapport au mélange dans lequel plâtre et coke se trouvent à l'état pulvérulent, le mélange dans lequel ceux-ci se présentent sous la forme d'éléments granulaires selon l'invention apporte un gain sensible de capacité et de rendement. C'est ainsi que, sur un four à boucle à régénérateur chauffé au fuel-oil d'une surface de 37 m$^2$ et pour une tirée de 100 à 110 T/jour et avec incorporation de 22 % de calcin, a pu par exemple être constaté un abaissement très notable des températures à maintenir (1 550 au lieu de 1 600 °C à la voûte ; 1 300 au lieu de 1 350 °C à la gorge) et, bien entendu, de la consommation d'énergie (6 à 7 %).

De tels résultats démontrent bien les avantages, annoncés dans le préambule, qu'apporte l'invention, aussi bien en matière technique qu'économique : elle trouve à s'appliquer non seulement dans les fabrications verrières de type courant, mais dans celles qui comportent des contraintes particulières, relatives notamment aux teneurs en fer, pour lesquelles l'emploi des laitiers est à éviter.

L'invention a ainsi finalement pour objet, non seulement le procédé de fabrication de verres qui vient d'être décrit, mais aussi à titre de produits industriels nouveaux, des éléments granulaires agglomérés composés principalement de particules de sulfates et de charbon de granulométries moyennes au plus égales au dixième de la granulométrie moyenne desdits éléments, présentant une densité apparente au moins égale à 0,6 et résultant de l'agglomération d'un mélange desdites particules, ainsi que les mélanges vitrifiables incluant de tels éléments granulaires.

Elle a également pour objet l'application du procédé aux fabrications de verres s'accommodant ou recherchant la présence de sulfures, en particulier de frittes riches en sulfures, éventuellement utilisables comme moyens d'apport de sulfures.

Tableau II

| Fontes (1) | Mélanges vitrifiables | | | | | | | Apports globaux | | Qualité d'affinage (nombre de bulles par kg de verre) (11) | Couleurs (sous forte épaisseur) (12) |
|---|---|---|---|---|---|---|---|---|---|---|---|
| | Matières premières complémentaires (% du verre à obtenir) | | | | | | | | | | |
| | Calcaire (2) | CO$_3$Na$_2$ (3) | SO$_4$Na$_2$ (4) | Charbon (5) | NO$_3$Na (6) | As$_2$O$_3$ (7) | Granulés (8) | SO$_3$ (9) | C (10) | | |
| A | 6,33 | 22,16 | 0,37 | 0,05 | — | — | — | 0,20 | 0,05 | Environ 40 000 | Verdâtre |
| B | 6,33 | 22,04 | 0,37 | 0,05 | 0,20 | 0,026 | — | 0,20 | 0,05 | id. | Vert plus pâle |
| | | | | | | | (⌀ 2 mm) | | | | |
| 1 | 6,06 | 22,43 | — | — | — | — | 0,465 | 0,20 | 0,052 | 100 à 200 | Ambre moyen |
| 2 | 6,06 | 22,31 | — | — | 0,20 | 0,026 | 0,465 | 0,20 | 0,052 | id. | Ambre clair |
| 3 | 6,06 | 22,00 | 0,55 | — | — | — | 0,465 | 0,50 | 0,052 | Env. 100 | Vert bleu |
| 4 | 6,06 | 21,88 | 0,55 | — | 0,20 | 0,026 | 0,465 | 0,50 | 0,052 | id. | Verdâtre |
| 5 | 6,06 | 21,71 | 1,175 | — | — | — | 0,465 | 0,85 | 0,052 | Env. 150 | Verdâtre |
| 6 | 6,06 | 21,38 | 1,48 | — | — | — | 0,465 | 1,05 | 0,052 | Env. 500 | Verdâtre |
| 7 | 6,06 | 20,65 | 2,405 | — | — | — | 0,465 | 1,55 | 0,052 | Env. 1 000 | Verdâtre |
| | | | | | | | (⌀ 0,2 mm) | | | | |
| 8 | 6,06 | 22,43 | — | — | — | — | 0,465 | 0,20 | 0,052 | Environ 40 000 | Verdâtre |
| 9 | 6,06 | 22,31 | — | — | 0,20 | 0,026 | 0,465 | 0,20 | 0,052 | Environ 40 000 | Verdâtre plus pâle |

## Revendications

1. Procédé de fabrication de verres comportant la fusion d'une charge vitrifiable contenant des sulfates et un agent réducteur au sein d'éléments granulaires et dont ils constituent les composants principaux, lesdits éléments étant dispersés de manière homogène parmi les autres matières premières de la charge, caractérisé en ce que lesdits éléments granulaires sont préparés à partir d'un mélange intime et homogène desdits composants principaux, par agglomération dudit mélange, et présentent une granulométrie moyenne au moins égale à 10 fois la granulométrie moyenne desdits composants principaux.

2. Procédé selon la revendication 1, caractérisé en ce que la granulométrie moyenne des éléments granulaires est comprise entre 1 et 5 mm.

6

3. Procédé selon l'une des revendications 1 ou 2, caractérisé en ce que les autres matières premières sont introduites dans la charge à l'état d'agglomérats.

4. Procédé selon l'une des revendications 1 et 2, caractérisé en ce que lesdits éléments granulaires sont incorporés, au sein d'agglomérats, aux autres matières premières.

5. Procédé selon l'une des revendications précédentes, caractérisé en ce que les sulfates et agent réducteur sont introduits dans lesdits éléments granulaires dans des proportions correspondant à la réduction certaine d'au moins un quart des ions sulfates ($SO_4^=$) à l'état d'ions sulfures ($S^=$).

6. Procédé selon la revendication 5, caractérisé en ce que les éléments granulaires correspondent à un apport potentiel d'ions sulfures, exprimé en $SO_3$, d'au moins 0,05 % du poids du verre à obtenir.

7. Procédé selon l'une des revendications précédentes, caractérisé en ce que les sulfates sont introduits dans les éléments granulaires principalement sous forme de sulfate de calcium, tel que gypse ou plâtre, de granulométrie de préférence inférieure à 0,1 mm.

8. Procédé selon l'une des revendications précédentes, caractérisé en ce que les éléments granulaires contiennent un liant carboné tel que brai ou fuel lourd.

9. Procédé selon l'une des revendications 1 à 7, caractérisé en ce que les éléments granulaires comportent à titre de liant un produit du type carboxyméthylcellulose.

10. Procédé selon l'une des revendications 1 à 7, caractérisé en ce que les éléments granulaires comportent à titre de liant du silicate de soude.

11. Eléments granulaires agglomérés composés principalement de particules de sulfates et de charbon de granulométries moyennes au plus égales au dixième de la granulométrie moyenne desdits éléments, présentant une densité apparente au moins égale à 0,6 et résultant de l'agglomération d'un mélange desdites particules.

12. Mélanges vitrifiables incluant des éléments granulaires selon la revendication 11.

13. Application d'un procédé selon l'une quelconque des revendications 1 à 10, à la fabrication de verres contenant des sulfures, notamment des frittes utilisables comme moyens d'apport de sulfures.

**Claims**

1. Method of making glasses comprising fusion of a vitrifiable charge containing sulphates and a reducing agent within granular elements of which they form the principal constituents, said elements being dispersed homogeneously among the other starting materials of the charge, characterised in that said granular elements are prepared from an intimate and homogeneous mixture of said principal constituents, by agglomeration of said mixture, and have a mean grain size at least 10 times the mean grain size of said principal constituents.

2. Method according to claim 1, characterised in that the mean grain size of the granular elements is from 1 to 5 mm.

3. Method according to one of claims 1 and 2, characterised in that the other starting materials are introduced to the charge in the agglomerated state.

4. Method according to one of claims 1 and 2, characterised in that said granular elements are incorporated, within the agglomerates, with other starting materials.

5. Method according to one of the preceding claims, characterised in that the sulphates and reducing agent are introduced to said granular elements in proportions corresponding to guaranteed reduction of at least a quarter of the sulphate ions ($SO_4^=$) to sulphide ions ($S^=$).

6. Method according to claim 5, characterised in that the granular elements correspond to a potential addition of sulphide ions, expressed as $SO_3$, of at least 0.05 % by weight of the glass to be obtained.

7. Method according to one of the preceding claims, characterised in that the sulphates are introduced to the granular elements principally in the form of calcium sulphate, such as gypsum or plaster, preferably of grain size less than 0.1 mm.

8. Method according to one of the preceding claims, characterised in that the granular elements contain a carbonaceous binder such as pitch or heavy fuel oil.

9. Method according to one of claims 1 to 7, characterised in that the granular elements comprise, as binder, a product of the carboxymethylcellulose type.

10. Method according to one of claims 1 to 7, characterised in that the granular elements comprise, as binder, sodium silicate.

11. Agglomerated granular elements composed principally of particles of sulphates and carbon of mean grain size not more than one tenth of the mean grain size of said elements, having an apparent density of at least 0.6, and resulting from agglomeration of a mixture of said particules.

12. Vitrifiable mixtures including granular elements according to claim 11.

13. Application of a method according to any one of claims 1 to 10, to manufacture of glasses containing sulphides, notably frits usable as means for adding sulphides.

**Ansprüche**

1. Verfahren zur Herstellung von Glas aus einer Schmelze, die aus einer einglasbaren Einlagerung

7

**0 020 224**

mit in Granulatelementen verteilten Sulfaten und einem Reduktionsmittel besteht, wobei die Elemente, die den wesentlichen Anteil ausmachen, homogen unter die anderen Ausgangssubstanzen der Einlagerung gemischt werden, dadurch gekennzeichnet, daß das Granulat aus einer innigen und homogenen Mischung der Hauptbestandteile durch Pressen der Mischung hergestellt wird und eine mittlere Korngröße von der zehnfachen mittleren Korngröße der Hauptbestandteile aufweist.

2. Verfahren nach Anspruch 1, dadurch gekennzeichnet, daß die mittlere Korngröße der Granulatelemente zwischen 1 und 5 mm liegt.

3. Verfahren nach einem der Ansprüche 1 oder 2, dadurch gekennzeichnet, daß die anderen Ausgangssubstanzen in gepreßtem Zustand in die Einlagerung eingebracht werden.

4. Verfahren nach einem der Ansprüche 1 und 2, dadurch gekennzeichnet, daß die Granulatelemente im gepreßtem Zustand in die anderen Ausgangssubstanzen eingearbeitet werden.

5. Verfahren nach einem der vorstehenden Ansprüche, dadurch gekennzeichnet, daß die Sulfate und das Reduktionsmittel in die Granulatelemente in einer Menge eingebracht werden, die für die Reduktion von wenigstens 1/4 der Sulfationen ($SO_4^=$) zu Sulfidionen ($S^=$) ausreicht.

6. Verfahren nach Anspruch 5, dadurch gekennzeichnet, daß die Granulatelemente dem Anteil der zugeführten Sulfidionen, ausgedrückt in $SO_3$ im wesentlichen entsprechen, die wenigstens 0,05 Gew.-% des zu erhaltenden Glases ausmachen.

7. Verfahren nach einem der vorstehenden Ansprüche, dadurch gekennzeichnet, daß die Sulfate in die Granulatelemente im wesentlichen in Form von Calciumsulfaten, wie Gips, in einer Korngröße von vorzugsweise unter 0,01 mm eingebracht werden.

8. Verfahren nach einem der vorstehenden Ansprüche, dadurch gekennzeichnet, daß die Granulatelemente ein karbonhaltiges Bindemittel wie Pech oder schweres Heizöl enthalten.

9. Verfahren nach einem der Ansprüche 1 bis 7, dadurch gekennzeichnet, daß die Granulatelemente anstelle von Bindemittel ein Produkt vom Typ Carboxymethylcellulose enthalten.

10. Verfahren nach einem der Ansprüche 1 bis 7, dadurch gekennzeichnet, daß die Granulatelemente anstelle von Bindemittel Natriumsilikat enthalten.

11. Gepreßte Granulatelemente, die im wesentlichen aus Sulfaten und Kohlenstoff bestehen und eine mittlere Korngröße, die zehnmal so groß ist wie die mittlere Korngröße der Elemente und eine scheinbare Dichte von wenigstens 0,6 aufweisen und durch das Pressen der Mischung der Substanzen entstanden sind.

12. Einglasbare Mischung aus Granulatelementen nach Anspruch 11.

13. Anwendung des Verfahrens nach einem der Ansprüche 1 bis 10 zur Herstellung von Glas mit Sulfiden, insbesondere Fritten mit Sulfiden, die als Einlagerungsmittel Verwendung finden.